# EUROPEAN PATENT SPECIFICATION

(11) **EP 1 530 188 B1**
(45) Date of publication and mention of the grant of the patent: **15.08.2007**
(21) Application number: 04077743.5
(22) Date of filing: 01.10.2004
(51) Int. Cl.: G09F 21/04, B32B 27/08, B44C 1/10

(54) **Translucent laminate provided with an image**
Mit einem Bild versehener, lichtdurchlässiger Mehrschichtwerkstoff
Laminé translucide, comportant une image.

(30) Priority: 03.10.2003 NL 1024452
(43) Date of publication of application: 11.05.2005
(73) Proprietor: Grafityp Selfadhesive Products N.V., 3530 Houthalen (BE)
(72) Inventor: Bosman, Herman Rudolph, 3530 Houthalen (BE); Bosman, Herman Rudolph, 3530 Houthalen (BE)
(74) Representative: van Westenbrugge, Andries

(56) References cited:
- WO-A-02/03108
- DE-A- 3 341 051

## Description

The present invention relates to a laminate translucent to light, provided with an image, methods for the production of such a laminate and the use of such a laminate to provide a pane or window with an image.

Such a laminate is known in the state of the art. This laminate consists of a layer that is essentially transparent to light and is provided on one side with an essentially light print side - that is to say an essentially white print side - on which an image is printed positive, and is provided on the other side with an essentially dark layer - that is to say an essentially black layer. An adhesive layer is applied to the essentially dark layer and a protective layer is applied thereon to protect the adhesive layer. The production of such laminates and other laminates is known in the art and is carried out by applying an adhesive layer or a layer of glue between the two layers, or by providing one of the layers with such an adhesive layer or layer of glue beforehand. The entire laminate is provided with perforations before the image is printed on the essentially light print side, as a result of which the laminate is essentially translucent to light. After removal of the protective layer, the laminate can be stuck, for example, on a pane or a window of, for example, a bus or a train, the image being discernible from outside the bus or the train and the passengers in the bus or the train being able to look at the surroundings through the pane and the laminate.

However, such a laminate according to the state of the art has disadvantages. Firstly, it is necessary that the laminate is provided on that side where the image is located with a protective layer that is essentially translucent to light, so that the image is prevented from becoming dirty and consequently no longer properly discernible. Bystanders are also easily able to pick the image off the pane or the window, in particular when this pane or window is easily accessible. Moreover, the image that is applied to such laminates is of moderate quality because this is as a rule applied by means of screen printing or digital printing.

EP A 170.472 discloses transparent or translucent panels comprising a light permeable material and a silhouette pattern, wherein the silhouette pattern comprises an opaque material that subdivides the panel into a plurality of opaque areas and a plurality of translucent areas, wherein an image is printed on the silhouette pattern so that the image is essentially only visible from one side of the panel and wherein the panel permits vision through the panel from both directions.

WO 02/03108 discloses an image-displaying sheet comprising an imaging layer having a plurality of through holes, and a transparent adhesive film, the surface of which is fixed to said imaging layer, and the back surface of which is used to bond said imaging layer to a transparent adherent. The imaging layer comprises a shielding film having the first dark shielding layer and the second white shielding layer, and an image-forming layer the surface of which is fixed to the back surface of said second shielding layer. The shielding effects of a shielding film are increased by the increase of the thickness of the first and second shielding layer, and at the same time, the whiteness of the second shielding layer is increased. In the image-displaying sheet, the thickness of the first shielding layer is in a range between 15 and 100 µm, and the thickness of said second shielding layer is in a range between 20 to 100 µm. The adhesive film comprises the first transparent adhesive layer which is adhered to said imaging layer, and the second transparent adhesive layer which is used to bond the imaging layer to the adherent, and the adhesive film has no through hole which communicates with any of the through holes of the imaging layer.

The present invention provides a solution to this problem and therefore relates to a laminate according to claims 1.

A first preferred embodiment of the invention is a laminate that comprises a first layer (a) and a second layer (b), wherein layer (a) has one side that is essentially dark in colour - that is to say preferably essentially black - and one side that is essentially light in colour - that is to say preferably essentially white - and the second layer (b), which is essentially translucent to light, is provided with an image as a mirror image and wherein this side of the second layer (b) - that is to say that side on which an image has been applied - is in contact with the side of the first layer (a) that is essentially light in colour. According to this first embodiment the sequence from the observer's side - the side from which the image can be discerned - is: (1) layer (b), (2) image, (3) side of layer (a) that is essentially light in colour, (4) side of layer (a) that is essentially dark in colour. The side of layer (b) on which there is no image is preferably also provided with an adhesive layer so that the laminate can be applied to a substrate. A purchaser for the laminate according to this embodiment can apply this laminate to the inside of a pane or window, after which incisions are made through both layers (a) and (b) by means of cutting and the cut-out parts can then be removed.

A second preferred embodiment of the invention is a laminate that comprises a layer (a) that is provided with cutting lines either before or after printing, wherein layer (a) has one side that is essentially dark in colour - that is to say preferably essentially black - and one side that is essentially light in colour - that is to say preferably essentially white -, wherein the side of this layer (a) that is essentially light in colour is provided with a positive image and wherein the other side of the first layer (a) - that is to say that side that is essentially dark in colour - has an adhesive layer. According to this second embodiment the sequence from the observation side - the side from which the image can be discerned - is (1) image, (2) side of layer (a) that is essentially light in colour, (3) side of layer (a) that is essentially dark in colour, (4) an adhesive layer. A purchaser of the laminate according to this second embodiment can apply this laminate to the outside of a pane or window, after which the cut-out parts can then be removed. It will be clear to those skilled in the art that according to this second embodiment the cutting lines can be made in advance, that is to say before printing the image. However, this can, of course, be carried out later on or even after the laminate has been applied to the outside of the window or the pane.

According to the first embodiment of the present invention it is preferred that the first layer (a) on the side that is in contact with the second layer (b), that is to say that side of layer (a) that is essentially light in colour, is provided with an adhesion layer (c), so that layers (a) and (b) adhere to one another. This first embodiment is thus made up as follows:
(1) adhesive layer so that the laminate can be applied to a substrate,
(2) layer (b),
(3) image in mirror image,
(4) adhesive layer (c),
(5) side of layer (a) that is essentially light in colour, and
(6) side of layer (a) that is essentially dark in colour.

This first embodiment can, for example, be applied in an appropriate manner to the inside of a window or a pane, for example of a shop window, as described above. This has the advantage that the image that has been applied to the laminate can be discerned by the public outside the shop, whilst customers and shop staff can see the public through the laminate.

According to the second embodiment of the present invention, it is preferred that layer (a) has an adhesive layer on the side that is essentially dark in colour. This second embodiment is thus made up as follows:
(1) adhesive layer (c),
(2) side of layer (a) that is essentially dark in colour,
(3) side of layer (a) that is essentially light in colour, and
(4) a positive image.

This embodiment can, for example, be applied in an appropriate manner to a pane or a window that is not easily accessible, such as is customary in the case of buses and trains, so that the laminate cannot easily be picked off the pane or the window. The advantage of this second embodiment over the first embodiment is that passengers in the bus or the train are not able to pick at the laminate or able to damage this in another way.

According to the invention, however, the first embodiment is preferred to the second embodiment.

Before the laminate is applied, that is to say in the form in which it is supplied to the purchaser, it is preferable that the adhesive layer on that side of layer (b) that is not in contact with the other layer (a) is provided with a protective layer (d). This protective layer prevents that the adhesive power of the adhesive layer decreases and that this adhesive layer becomes damaged, for example during transport.

According to the present invention it is preferable that the cut-outs in the layers are essentially linear. That is to say cutting lines are made or cut in the layers by means of, for example, a cutter plotter, where these lines can be removed vertically or horizontally at any angle. Preferably these lines continue over the entire length or width of the laminate. As a result a line pattern is produced, consisting of lines formed by the combination of layer (a) and layer (b) according to the first embodiment and of lines consisting of layer (a) according to the second embodiment. The image can then be discerned from the layer (a) side, whilst it is possible to "look" through the laminate from the layer (b) side. It is obvious that the greater the distance between observer and laminate the better is the "image quality" of the image and that it is easier to "look" through the laminate - from the other side.

For good "image quality" of the image it is preferable according to the invention that more than 50 % and less than 80 % of the layers (a) and (b) according to the first embodiment and more than 50 % and less than 80 % of layer (a) in the case of the second embodiment remains in place. That is to say, according to the first embodiment more than 20 % and less than 50 % is removed from the laminate after this has been applied to the inside of a window or pane and according to the second embodiment more than 20 % and less than 50 % is removed after the laminate has been applied to the outside of a window or pane. Preferably, the size of the cut-outs is virtually the same.

It will furthermore be clear to a person skilled in the art that the "image quality" of the image increases the greater the width of the lines that are formed by the combination of layer (a) and layer (b) in the first embodiment or of layer (a) in the second embodiment in relation to the cut-outs.

According to the invention it is preferable that the layers consist of plastic film.

The invention also relates to a method for the production of a laminate according to the invention, wherein:
(a) a first layer (i) is provided that is essentially translucent to light and wherein one side of the first layer is provided with an adhesive layer and another side of the first layer is a print side,
(b) the print side is provided with an image in mirror image,
(c) the first layer (i) is laminated onto a second layer (ii), wherein the second layer (ii) is essentially dark in colour on one side and is essentially light in colour on another side, wherein the side that is essentially light in colour is in contact with the print side, and
(d) cut-outs are made in the layers (i) and (ii).

This method is suitable for the production of the first embodiment according to the invention.

According to a second embodiment according to this invention the method for the production of the laminate according to the invention can also be carried out, wherein:
(a) a layer (ii) is provided that is essentially dark in colour on one side and essentially light in colour on another side, wherein the side that is essentially dark in colour has an adhesive layer,
(b) a positive image is printed on the side of layer (ii) that is essentially light in colour, and
(c) cut-outs are made in the layer (ii).

This method is suitable for the production of the second embodiment according to the invention.

It will also be clear to a person skilled in the art that in the case of the second method linear incisions can already be made in the layer, this is then printed by the customer, after which the incised lines are removed. It is also possible that the manufacturer himself prints the layer and markets this as a printed laminate.

According to the invention the image is applied by means of any type of printing and preferably by inkjet printing because this gives a much better image quality than, for example, screen printing.

The invention also relates to the use of a laminate according to the invention or a laminate that can be obtained according to one of the methods according to the invention to provide a pane or window with an image, for example a pane or a window of a shop window, bus or train.

## Claims

1. Laminate that is translucent to light, provided with an image that can be discerned from the viewing side, wherein the laminate comprises:
(i) a first layer (a) that is essentially dark in colour on the non-viewing side and that is essentially light in colour on the viewing side, and
(ii) optionally a second layer (b) that is essentially translucent to light,
wherein the image is printed as a positive image on the viewing side of layer (a) and layer (b) is absent, or wherein the image is printed as a mirror image on layer (b),
wherein the side of layer (b) that is provided with the image is in contact with the side of layer (a) that is essentially light in colour; and wherein the layers are provided with cut-outs such that the image can be discerned from the viewing side.

2. Laminate according to Claim 1, wherein the first layer (a) is provided with an adhesive layer (c) on the side that is essentially light in colour.

3. Laminate according to Claim 1, wherein the first layer (a) is provided with an adhesive layer (c) on the side that is essentially dark in colour.

4. Laminate according to any one of the preceding claims, wherein the adhesive layer is provided with a protective layer (d) on that side of layer (b) that is not in contact with the other layer (a).

5. Laminate according to any one of the preceding claims, wherein the cut-outs in the layers are essentially linear.

6. Laminate according to any one of the preceding claims, wherein the layers are a plastic film.

7. Laminate according to any one of the preceding claims, wherein the size of the cut-outs is virtually the same.

8. Method for the production of a laminate according to any one of Claims 1 - 7, wherein:
(i) a first layer (b) is provided that is essentially translucent to light and wherein one side of the first layer is provided with an adhesive layer and another side of the first layer is a print side,
(ii) the print side is provided with an image in mirror image,
(iii) the first layer (b) is laminated onto a second layer (a), wherein the second layer (a) is essentially dark in colour on one side and is essentially light in colour on another side, wherein the side that is essentially light in colour is in contact with the print side, and
(iv) cut-outs are made in the layers (a) and (b).

9. Method for the production of a laminate according to any one of Claims 1 - 7, wherein:
(i) a layer (a) is provided that is essentially dark in colour on one side and essentially light in colour on another side,
(ii) a positive image is printed on the side of layer (a) that is essentially light in colour, and
(iii) cut-outs are made in the layer (a).

10. Method according to Claim 8 or Claim 9, wherein the image is applied by means of any type of printing and preferably by means of inkjet printing.

11. Use of a laminate according to any one of Claims 1 - 7 or a laminate obtainable by the method according to any one of Claims 8 - 10 to provide a pane or window with an image.

## Patentansprüche

1. Laminat, das durchscheinend für Licht ist, versehen mit einem Bild, das von der Betrachtungsseite aus erkannt werden kann, wobei das Laminat umfasst:
(i) eine erste Schicht (a), die auf der Nichtbetrachtungsseite im wesentlichen von dunkler Farbe ist und die auf der Betrachtungsseite im wesentlichen von heller Farbe ist, und
(ii) gegebenenfalls eine zweite Schicht (b), die im wesentlichen durchscheinend für Licht ist,
wobei das Bild als ein positives Bild auf die Betrachtungsseite der Schicht (a) gedruckt ist und Schicht (b) abwesend ist, oder wobei das Bild als ein Spiegelbild auf die Schicht (b) gedruckt ist, wobei die mit dem Bild versehene Seite der Schicht (b) in Kontakt mit der Seite von Schicht (a) ist, die im wesentlichen von heller Farbe ist; und wobei die Schichten mit Ausschnitten versehen sind, sodass das Bild von der Betrachtungsseite aus erkannt werden kann.

2. Laminat gemäß Anspruch 1, wobei die erste Schicht (a) auf der Seite von im wesentlichen heller Farbe mit einer Klebschicht (c) versehen ist.

3. Laminat gemäß Anspruch 1, wobei die erste Schicht (a) auf der Seite von im wesentlichen dunkler Farbe mit einer Klebschicht (c) versehen ist.

4. Laminat gemäß irgendeinem der vorhergehenden Ansprüche, wobei die Klebschicht auf der Seite der Schicht (b), die nicht in Kontakt mit der anderen Schicht (a) ist, mit einer Schutzschicht (d) versehen ist.

5. Laminat gemäß irgendeinem der vorhergehenden Ansprüche, wobei die Ausschnitte in den Schichten im wesentlichen linear sind.

6. Laminat gemäß irgendeinem der vorhergehenden Ansprüche, wobei die Schichten eine Kunststoff-Folie sind.

7. Laminat gemäß irgendeinem der vorhergehenden Ansprüche, wobei die Größe der Ausschnitte so gut wie gleich ist.

8. Verfahren für die Herstellung eines Laminats gemäß irgendeinem der Ansprüche 1 bis 7, wobei:
(i) eine erste, im wesentlichen für Licht durchscheinende Schicht (b) bereitgestellt wird und wobei eine Seite der ersten Schicht mit einer Klebschicht versehen wird und die andere Seite der ersten Schicht eine Bedruckseite ist,
(ii) die Bedruckseite mit einem spiegelbildlichen Bild versehen wird,
(iii) die erste Schicht (b) auf eine zweite Schicht (a) laminiert wird, wobei die zweite Schicht (a) auf einer Seite im wesentlichen von dunkler Farbe ist und auf der anderen Seite im wesentlichen von heller Farbe ist, wobei die Seite, die im wesentlichen von heller Farbe ist, in Kontakt mit der Bedruckseite ist, und
(iv) in den Schichten (a) und (b) Ausschnitte gemacht werden.

9. Verfahren für die Herstellung eines Laminats gemäß irgendeinem der Ansprüche 1 bis 7, wobei:
(i) eine Schicht (a) bereitgestellt wird, die auf einer Seite im wesentlichen von dunkler Farbe und auf der anderen Seite im wesentlichen von heller Farbe ist,
(ii) auf die Seite der Schicht (a) von im wesentlichen heller Farbe ein positives Bild gedruckt wird,
(iii) in der Schicht (a) Ausschnitte gemacht werden.

10. Verfahren gemäß Anspruch 8 oder Anspruch 9, wobei das Bild mittels irgendeiner Art von Drucken und vorzugsweise mittels Tintenstrahldruck aufgebracht wird.

11. Verwendung eines Laminats gemäß irgendeinem der Ansprüche 1 bis 7 oder eines Laminats, das durch das Verfahren gemäß irgendeinem der Ansprüche 8 bis 10 erhältlich ist, um eine Fensterscheibe oder ein Fenster mit einem Bild zu versehen.

## Revendications

1. Laminé qui est translucide à la lumière, doté d'une image qui peut être discernée depuis le côté de visualisation, dans lequel le laminé comprend :
(i) une première couche (a) qui est essentiellement de couleur foncée sur le côté de non-visualisation et qui est essentiellement de couleur claire sur le côté de visualisation, et
(ii) éventuellement, une seconde couche (b) qui est essentiellement translucide à la lumière,
dans lequel l'image est imprimée comme une image positive sur le côté de visualisation de la couche (a) et la couche (b) est absente, ou dans lequel l'image est imprimée comme une image miroir sur la couche (b), dans lequel le côté de la couche (b) qui est doté de l'image est en contact avec le côté de la couche (a) qui est essentiellement de couleur claire ; et dans lequel les couches dont dotées de découpes de telle sorte que l'image peut être discernée depuis le côté de visualisation.

2. Laminé selon la revendication 1, dans lequel la première couche (a) est dotée d'une couche adhésive (c) sur le côté qui est essentiellement de couleur claire.

3. Laminé selon la revendication 1, dans lequel la première couche (a) est dotée d'une couche adhésive (c) sur le côté qui est essentiellement de couleur foncée.

4. Laminé selon l'une quelconque des revendications précédentes, dans lequel la couche adhésive est dotée d'une couche de protection (d) sur le côté de la couche (b) qui n'est pas en contact avec l'autre couche (a).

5. Laminé selon l'une quelconque des revendications précédentes, dans lequel les découpes dans les couches sont essentiellement linéaires.

6. Laminé selon l'une quelconque des revendications précédentes, dans lequel les couches sont un film plastique.

7. Laminé selon l'une quelconque des revendications précédentes, dans lequel la taille des découpes est virtuellement identique.

8. Procédé de production d'un laminé selon l'une quelconque des revendications 1 à 7, dans lequel :
(i) une première couche (b) est prévue qui est essentiellement translucide à la lumière et dans laquelle un côté de la première couche est doté d'une couche adhésive et un autre côté de la première couche est un côté d'impression,
(ii) le côté d'impression est doté d'une image en image symétrique,
(iii) la première couche (b) est laminée sur une seconde couche (a), dans laquelle la seconde couche (a) est essentiellement de couleur foncée sur un côté et est essentiellement de couleur claire sur un autre côté, dans laquelle le côté qui est essentiellement de couleur claire est en contact avec le côté d'impression, et
(iv) des découpes sont réalisées dans les couches (a) et (b).

9. Procédé de production d'un laminé selon l'une quelconque des revendications 1 à 7, dans lequel :
(i) une couche (a) est prévue qui est essentiellement de couleur foncée sur un côté et essentiellement de couleur claire sur l'autre côté,
(ii) une image positive est imprimée sur le côté de la couche (a) qui est essentiellement de couleur claire, et
(iii) des découpes sont réalisées dans la couche (a).

10. Procédé selon la revendication 8 ou la revendication 9, dans lequel l'image est appliquée au moyen de n'importe quel type d'impression et de préférence au moyen d'une impression par jet d'encre.

11. Utilisation d'un laminé selon l'une quelconque des revendications 1 à 7 ou laminé pouvant être obtenu par le procédé selon l'une quelconque des revendications 8 à 10 pour doter une vitre ou une fenêtre, d'une image.
